## Europäisches Patentamt
## European Patent Office
## Office européen des brevets

(19)

(11) Numéro de publication: **0 265 568 B1**

(12)
# FASCICULE DE BREVET EUROPEEN

(45) Date de publication du fascicule du brevet:
**27.12.90**

(51) Int. Cl.⁵: **B64G 1/44,** B64G 1/66

(21) Numéro de dépôt: **86402448.4**

(22) Date de dépôt: **31.10.86**

(54) **Mécanisme de déploiement automatique d'un appendice d'un véhicule spatial animé d'un mouvement de rotation sur lui-même.**

(43) Date de publication de la demande:
**04.05.88 Bulletin 88/18**

(45) Mention de la délivrance du brevet:
**27.12.90 Bulletin 90/52**

(84) Etats contractants désignés:
**DE NL**

(56) Documents cités:
**EP-A- 0 064 917**
**DE-A- 2 717 426**
**FR-A- 1 030 268**
**FR-A- 2 088 280**
**FR-A- 2 371 343**
**US-A- 3 363 474**
**US-A- 3 525 483**
**US-A- 3 863 870**

**AIRCRAFT ENGINEERING,**
**vol. 56, no. 1, janvier 1984, pages 2-5, Londres, GB; H. KELLERMEIER et al.: "The retractable ultra-lightweight (ULP) solar array for retrievable space platforms"**

(73) Titulaire: **AEROSPATIALE Société Nationale Industrielle, 37, Boulevard de Montmorency, F-75781 Paris Cédex 16(FR)**

(72) Inventeur: **Henry, Jean-Pierre Garbejaire B. 108, 13 Ruelle des Amandiers, F-06560 Valbonne(FR)**
Inventeur: **Pelenc, Lionel, Chemin de l'Avane, F-06580 Pegomas(FR)**

(74) Mandataire: **Mongrédien, André et al, c/o BREVATOME 25, rue de Ponthieu, F-75008 Paris(FR)**

## Description

La présente invention concerne un mécanisme permettant d'assurer le déploiement automatique d'un appendice tel qu'un panneau solaire, sur un véhicule spatial constitué notamment par un satellite animé d'un mouvement de rotation sur lui-même.

La mise sur orbite d'un satellite artificiel autour de la terre s'effectue en plusieurs étapes. Ainsi, dans le cas d'un satellite géo-stationnaire, celui-ci est généralement placé lors de son lancement sur une orbite basse quasi-circulaire dont l'altitude est par exemple d'environ 200 km. Il est seulement transféré par la suite sur son orbite définitive, constituée dans ce cas par une orbite géo-stationnaire quasi-circulaire, située à environ 36000 km de la terre.

Le passage de l'orbite basse à l'orbite géostationnaire est effectué au cours d'une phase dite de transfert. La phase de transfert comprend tout d'abord des manoeuvres dites de périgée au cours desquelles le satellite passe de l'orbite basse à une orbite elliptique de transfert dont le périgée se situe sur l'orbite géo-stationnaire à atteindre. Le passage de l'orbite elliptique de transfert l'orbite géo-stationnaire s'effectue au cours de manoeuvres d'apogée constituant la deuxième partie de la phase de transfert.

Au cours de cette phase de transfert, et notamment lors des manoeuvres d'apogée, le satellite est soumis à des sollicitations mécaniques importantes. Or, les mécanismes actuels de déploiement des panneaux solaires comprennent généralement des organes de commande et des structures qu'il serait trop contraignant de dimensionner pour résister à ces sollicitations mécaniques, si le déploiement était réalisé en phase de transfert. Pour cette raison, ces mécanismes sont souvent prévus pour ne fonctionner qu'après la mise en orbite géo-stationnaire du satellite.

Lors de la phase de transfert, les équipements opérationnels du satellite sont généralement à l'état de veille ou hors fonctionnement. Cependant, certains organes vitaux de survie et de surveillance du satellite nécessitant de l'énergie électrique doivent pouvoir fonctionner. Il est donc nécessaire de disposer au cours de la phase de transfert d'une certaine quantité d'énergie électrique.

Par ailleurs, la durée de la phase de transfert peut être relativement longue, puisqu'elle peut comporter le parcours de plusieurs orbites elliptiques de transfert dont la durée unitaire est d'environ 10 heures. L'énergie électrique ne peut donc être fournie exclusivement par les sources secondaires d'électricité telles que les batteries chimiques équipant le satellite, car cela conduirait à un poids et à un encombrement trop élevés.

Dans le cas d'un satellite artificiel stabilisé suivant trois axes au cours de la phase de transfert, il a été proposé dans la demande de brevet français n° 2 505 288 appartenant à la demanderesse de résoudre ce problème en réalisant un déploiement partiel des panneaux solaires, dés que la manoeuvre de périgée est effectuée.

Cependant, dans certains cas de satellite spinné en phase de transfert, c'est-à-dire d'un satellite animé au cours de cette phase d'un mouvement de rotation autour d'un axe propre qui peut être par exemple l'axe longitudinal du satellite, la solution proposée dans ce brevet français n'est pas satisfaisante. En effet, l'énergie électrique fournie par le déploiement d'un seul panneau de chacune des ailes peut devenir alors insuffisante. Dans ce cas, il est donc nécessaire d'augmenter la surface des cellules solaires exposées lors de la phase de transfert.

Comme l'illustrent notamment les figures 11 et 12 du document US-A 3 863 870, il est possible, sur un satellite spiné, d'obtenir le déploiement des panneaux solaires sous l'effet de la force centrifuge, jusqu'à une position stable naturelle dans laquelle les panneaux sont situés dans un plan passant par l'axe de rotation du satellite. Cependant, cette position stable ne correspond pas au déploiement complet des panneaux solaires, qui nécessite une rotation au-delà de cette position stable. Pour parvenir au déploiement complet, il est donc nécessaire d'avoir recours à un apport d'énergie extérieur, par exemple à l'aide de ressorts ou de barres de torsion, comme l'illustre le document FR-A 2 088 280. Etant donné que ces mécanismes peuvent se rompre, notamment lors des manoeuvres d'apogée, le déploiement complet des panneaux risque de ne pas être obtenu.

L'invention a précisément pour objet un nouveau mécanisme de déploiement permettant d'effectuer le déploiement complet des générateurs solaires lors de la phase de transfert d'un satellite spiné, sans apport d'énergie autre que la force centrifuge résultant de la rotation du satellite sur lui-même. L'absence de tout dispositif mécanique du type ressort ou barre de torsion pour assurer le déploiement de générateurs solaires permet de supprimer tout risque de rupture de ces dispositifs pouvant résulter des sollicitations mécaniques auxquelles est soumis le satellite lors des manoeuvres d'apogée. Le déploiement complet des générateurs solaires est ainsi assuré.

A cet effet, et conformément à l'invention, il est proposé un mécanisme de déploiement automatique d'un appendice fixé sur une face d'un véhicule spatial, sous le seul effet d'une rotation de ce véhicule autour d'un axe 0, ledit appendice comprenant au moins deux panneaux consécutifs articulés et présentant un rentre de gravité G, ce mécanisme de déploiement étant caractérisé en ce qu'il agit sur chacun des panneaux de façon à accroître en permanence la distance séparant l'axe de rotation 0 du véhicule du centre de gravité G dudit appendice, depuis une position initiale dans laquelle les panneaux sont complètement repliés, jusqu'à une position finale dans laquelle les panneaux sont complètement ouverts sans passer par und position stable naturelle dans laquelle les panneaux sont déployés dans un plan passant par l'axe de rotation 0 du véhicule, ladite postition finale étant située au delà de ladite position stable naturelle.

De cette manière, sans faire intervenir l'énergie cinétique des panneaux, leur centre de gravité sera placé dans un champ de gravité centrifuge qui conduit pour chaque position, à un apport d'énergie aux panneaux dans le sens de l'ouverture.

Selon un mode de réalisation préféré de l'invention dans lequel l'appendice comprend un panneau intermédiaire articulé autour d'un premier axe d'articulation sur le véhicule spatial et un panneau externe articulé autour d'un deuxième axe d'articulation sur le panneau intermédiaire, le mécanisme de déploiement comprend au moins un câble enroulé sur au moins deux poulies solidaires respectivement du véhicule spatial et du panneau externe, lesdites poulies étant disposées respectivement à proximité desdits premier et deuxième axes d'articulation, de telle sorte que le rayon d'enroulement du câble autour du premier axe d'articulation augmente en permanence depuis ladite position initiale jusqu'à ladite position finale, et que le rayon d'enroulement du câble autour du deuxième axe d'articulation diminue en permanence depuis ladite position initiale jusqu'à ladite position finale.

Une étude analytique de la cinématique montre que les proportions géométriques doivent respecter certains rapports pour produire les effets recherchés.

Dans une première variante de réalisation de l'invention, le mécanisme de déploiement comprend une première paire de poulies circulaires solidaires du véhicule spatial et dont les axes sont disposés symétriquement et de façon excentrée par rapport au premier axe d'articulation, une deuxième paire de poulies circulaires solidaires du panneau externe et dont les axes sont disposés symétriquement et de façon excentrée par rapport au deuxième axe d'articulation, et deux câbles enroulés en sens inverse et fixés sur une poulie de chacune desdites première et deuxième paires.

Selon une deuxième variante de réalisation de l'invention, les poulies ont un rayon variable et sont centrées respectivement sur le premier et le deuxième axes d'articulation. Dans ce cas, les poulies peuvent notamment être de forme elliptique.

On décrira maintenant, à titre d'exemple non limitatif, un mode de réalisation préféré de l'invention en se référant aux dessins annexés dans lesquels:

- la figure 1 représente de façon schématique et en vue de côté une partie d'un satellite artificiel portant une aile de générateur solaire formée de deux panneaux et équipé d'un mécanisme de déploiement conforme à l'invention, l'aile de générateur solaire occupant sa position initiale repliée;
- la figure 2 est une vue selon la flèche F2 de la figure 1,
- la figure 3 est une vue comparable à la figure 1 montrant la position occupée par le générateur solaire à la fin de son déploiement,
- la figure 4 illustre de façon schématique le déplacement du centre de gravité G du générateur solaire représenté sur les figures 1 à 3 pour différentes positions de ce générateur au cours de son déploiement
- la figure 5 est une courbe représentant les variations des angles α et β formés respectivement entre le panneau intermédiaire et le satellite et entre le panneau externe et le panneau intermédiaire pour différentes positions du générateur solaire lors de son déploiement,
- la figure 6 est une courbe représentant l'évolution de la distance OG entre l'axe de rotation O du satellite et le centre de gravité G du générateur solaire, pour différentes positions de ce panneau lors de son déploiement, et
- la figure 7 est une vue de côté schématique représentant, en cours de déploiement, un générateur solaire de satellite équipé d'un mécanisme de déploiement illustrant une variante de réalisation de l'invention.

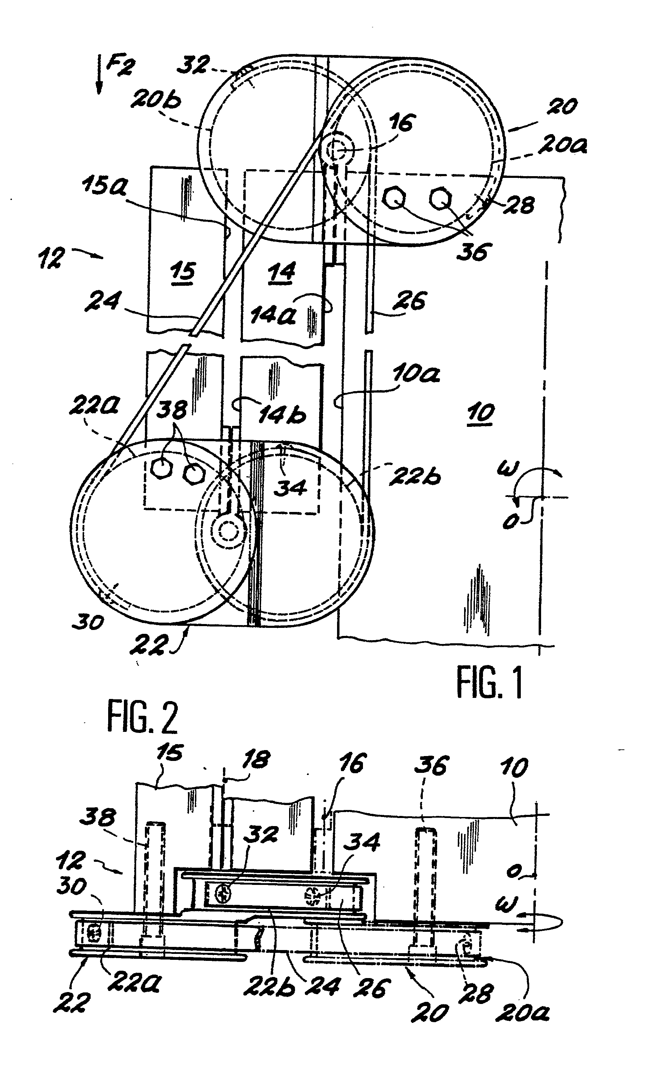

Sur les figures 1 à 3, on a représenté de façon très schématique et en partie seulement le corps 10 d'un satellite artificiel. De façon connue, deux ou trois générateurs solaires sont articulés sur le corps 10 du satellite. Seul l'un de ces générateurs solaires est représenté en 12 sur les figures.

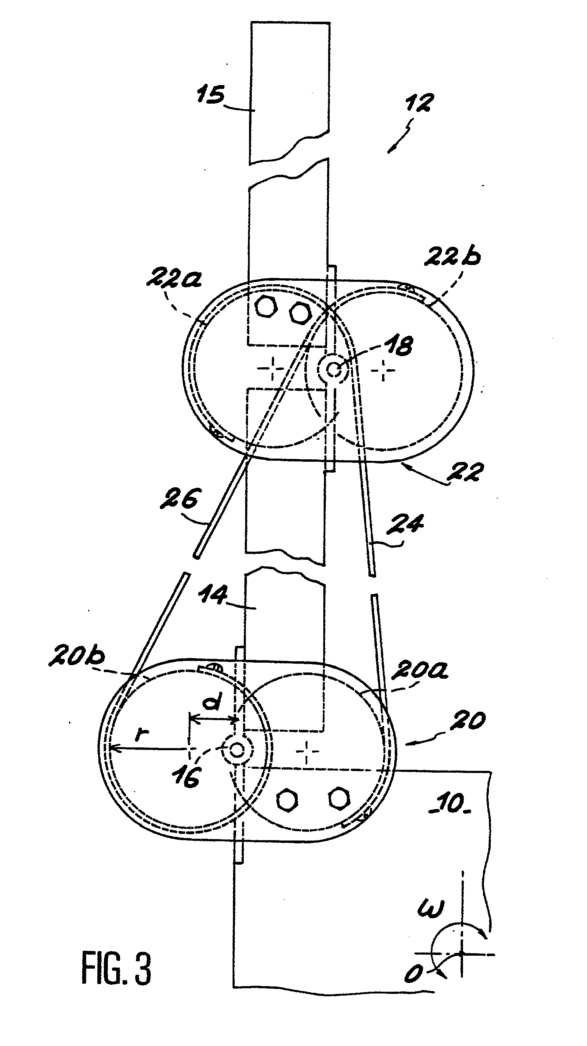

Chacun des générateurs solaires 12 comprend au moins deux panneaux consécutifs articulés de façon à pouvoir occuper une position repliée (figure 1) contre une face 10a du corps 10, lors du lancement du satellite et à pouvoir ensuite se déplier complètement, conformément à l'invention, sous l'effet de la seule rotation du satellite autour de son axe propre de rotation 0, au début de la phase de transfert (figure 3).

Dans le mode de réalisation particulier représenté sur les figures 1 à 3, le générateur solaire 12 comprend deux panneaux 14 et 15 approximativement d'égale longueur, qui seront appelés respectivement par la suite panneau intermédiaire et panneau externe. Pour faciliter la compréhension, le rapport entre l'épaisseur et la longueur des panneaux a été volontairement accru sur les figures 1 et 3.

Le panneau intermédiaire 14 est articulé par une de ses extrémités sur le corps 10 du satellite autour d'un axe 16 orienté parallèlement à l'axe de rotation O du satellite. L'axe 16 est placé à l'intersection des plans contenant la face 10a du corps du satellite et la face en regard 14a du panneau 14, et à l'extrémité de la face 10a, de telle sorte que le panneau 14 peut pivoter d'environ 180° depuis sa position repliée de la figure 1 jusqu'à sa position de complet déploiement de la figure 3.

De façon comparable, le panneau externe 15 est articulé par une de ses extrémités sur l'extrémité du panneau intermédiaire 14 opposée à l'axe 16 autour d'un axe 18 parallèle à l'axe 16. L'axe 18 est placé à l'intersection des plans contenant, au cours du mouvement, la face 14b du panneau 14 opposée à la face 14a et la face en regard 15a du panneau 15, de telle sorte que le panneau 15 peut pivoter d'environ 180° par rapport au panneau 14, depuis sa position de la figure 1 où il est replié contre le panneau 14, jusqu'à sa position de complet déploiement de la figure 3 où il est situé dans l'alignement du panneau 14.

En l'absence de tout mécanisme de coordination du déploiement du générateur solaire 12, une rotation ω du satellite autour de l'axe O aurait pour effet d'amener le générateur solaire 12 dans une position stable d'énergie potentielle minimale dans le champ de gravité résultant de cette rotation. Cette position stable correspondrait à la position des panneaux pour laquelle le centre de gravité du générateur est le plus éloigné de l'axe O. Elle est atteinte lorsque les panneaux sont déployés dans le plan contenant à la fois l'axe de rotation O du satellite et l'axe d'articulation 16 du panneau 14 sur le corps du satellite.

Si on laisse le générateur solaire parvenir jusqu'à cette position stable, son déploiement complet ne pourra être obtenu qu'en effectuant un apport d'énergie par exemple à l'aide de ressorts ou de barres de torsion, ce qui n'est pas satisfaisant lorsqu'on désire que le déploiement soit réalisé en phase de transfert.

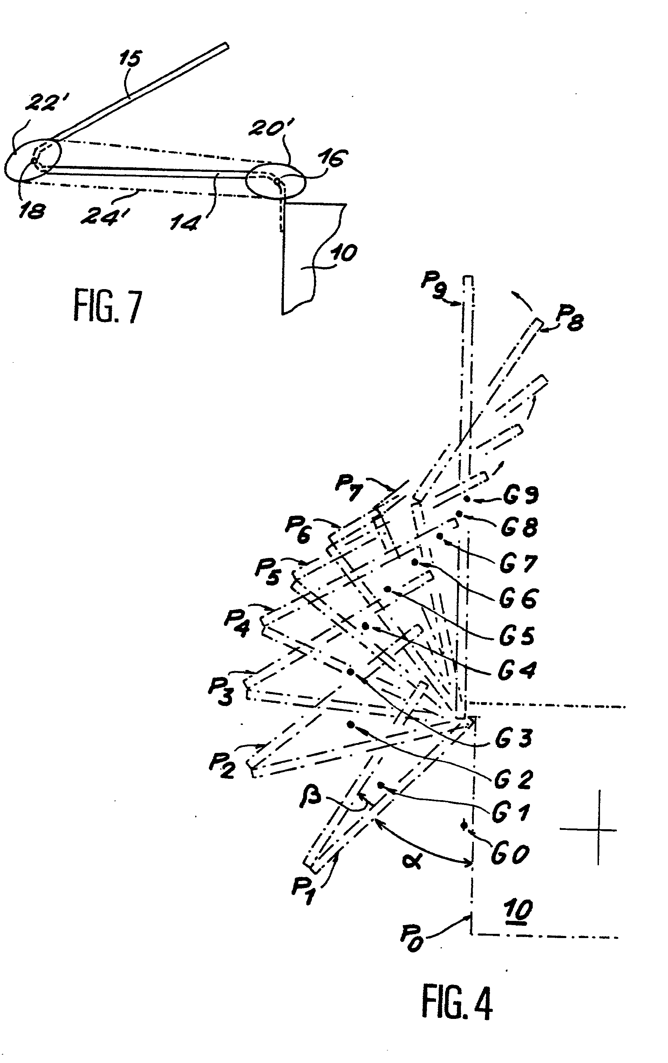

Conformément l'invention, le générateur solaire 12 est équipé d'un mécanisme de déploiement permettant de contrôler ce déploiement de telle sorte que la distance de l'axe de rotation O du satellite au centre de gravité G du générateur (figure 4) augmente en permanence jusqu'à ce que le générateur soit complètement déployé. Ainsi, la position de déploiement complet du générateur solaire correspond à une position stable qui peut être atteinte sous le seul effet de la force centrifuge, sans apport d'énergie extérieure.

Un mécanisme de déploiement ainsi conçu permet donc de passer de la position repliée représentée sur la figure 1 à la position de déploiement dans laquelle les panneaux sont complètement ouverts, représentée sur la figure 3, sous le seul effet d'une rotation ω , de signe quelconque, du satellite autour de son axe propre O, dans le cas de satellite spinné en phase de transfert. On peut ainsi disposer, lors de cette phase de transfert, de l'énergie électrique obtenue à l'aide des cellules photovoltaïques équipant les générateurs solaires du satellite, sans apport d'énergie extérieure et surtout sans avoir besoin d'énergie extérieure au panneau pour produire le déploiement.

Dans le mode de réalisation représenté, le mécanisme de déploiement selon l'invention est constitué par un ensemble de poulies et de câbles qui va maintenant être décrit.

Ce mécanisme comprend, fixés à une extrémité de chacun des axes d'articulation 16 et 18, deux dispositifs identiques désignés respectivement par les références 20 et 22. Chacun des dispositifs 20 et 22 est formé de deux poulies circulaires identiques 20a, 20b et 22a, 22b. Les poulies formant chacun des dispositifs et 22 sont solidarisées l'une de l'autre, de telle sorte que leurs axes soient distincts, parallèles à l'axe d'articulation 16, 18 qui leur correspond et disposés symétriquement par rapport à cet axe.

Comme l'illustre en particulier la figure 2, les poulies 20a et 22a d'une part et 20b et 22b d'autre part, sont disposées dans deux plans de symétrie perpendiculaires aux axes d'articulation 16 et 18 et décalées l'une par rapport à l'autre. Cette disposition permet de relier les poulies 20a et 22a à l'aide d'un premier câble 24 et de relier les poulies 20b et 22b à l'aide d'un deuxième câble 26. Le mot "câble" désigne ici indifféremment un câble, une courroie ou tout dispositif analogue.

De façon plus précise, les extrémités du câble 24 sont fixées respectivement en 28 sur la poulie 20a et en 30 sur la poulie 22a, de telle sorte que le câble 24 soit tendu entre les poulies. De plus, le sens d'enroulement du câble 24 sur les poulies 20a et 22a est tel que le brin du câble situé entre les poulies passe à proximité de l'axe 16 et, au contraire, en un point éloigné de l'axe 18 lorsque le générateur 12 est replié comme l'illustre la figure 1.

De façon comparable, les deux extrémités du câble 26 sont fixées respectivement en 32 et en 34 sur les poulies 20b et 22b, de telle sorte que le câble 26 soit tendu entre les poulies. De plus, le sens d'enroulement du câble 26 sur les poulies 20b et 22b est tel que le brin du câble situé entre les poulies passe à proximité de l'axe 16 et en un point éloigné de l'axe 18, dans la position repliée représentée sur la figure 1.

En outre, le dispositif 20 est fixé par exemple au moyen de vis 36 sur le corps 10 du satellite. De même, le dispositif 22 est fixé par exemple au moyen de vis 38 sur le panneau externe 15.

Dans le mécanisme de déploiement qui vient d'être décrit, les câbles 24 et 26 constituent des câbles antagonistes, dont l'enroulement sur les poulies excentrées constituant les dispositifs 20 et 22 permet, sous l'effet de la force centrifuge résultant de la rotation ω du satellite autour de l'axe O, de contrôler le déploiement du générateur solaire 12 afin que la distance OG entre l'axe O et le centre de gravité G de ce générateur augmente en permanence depuis la position repliée de la figure 1 jusqu'à la position de déploiement complet de la figure 3. Cette évolution de la distance OG lors du déploiement du générateur solaire est obtenue grâce à la structure des dispositifs 20 et 22 qui est telle que la distance séparant les brins des câbles 24 et 26 situés entre ces dispositifs de l'axe 16 augmente en permanence alors que la distance séparant ces mêmes brins de câbles de l'axe 18 diminue en permanence, depuis la position repliée jusqu'à la position de déploiement complet du générateur. Ces distances entre les brins des câbles et les axes 16 et 18 seront appelées par la suite "rayons d'enroulement" des câbles autour de ces axes.

Sur la figure 4, on a représenté schématiquement différentes positions occupées par le générateur solaire au fur et à mesure de son déploiement. Ces positions sont désignées par les références $P_0$ à $P_9$, la position $P_0$ correspondant à la position initiale de la figure 1, dans laquelle les panneaux sont complètement repliés, alors que la position $P_9$ correspond à la position finale de déploiement complet représentée sur la figure 3. La position du centre de gravité G du générateur dans les positions $P_0$ à $P_9$ est désignée quant à elle par les références $G_0$ à $G_9$.

Comme l'illustrent en particulier les courbes de la figure 5, au cours d'une première phase A de déploiement du générateur 12, l'angle $\alpha$ formé entre le panneau 14 et la face 10a du corps 10 augmente plus rapidement que l'angle $\beta$ formé entre les panneaux 14 et 15. Cela est dû au fait que, pendant cette première phase A, le rayon d'enroulement des câbles 24 et 26 autour de l'axe d'articulation 16 du panneau 14 sur le corps du satellite est inférieur au rayon d'enroulement des câbles autour de l'axe d'articulation 18 du panneau externe 14 sur le panneau intermédiaire 15. La situation se trouve inversée dans la deuxième phase B du déploiement du générateur solaire 12, ce qui explique que l'angle β augmente alors plus rapidement que l'angle α.

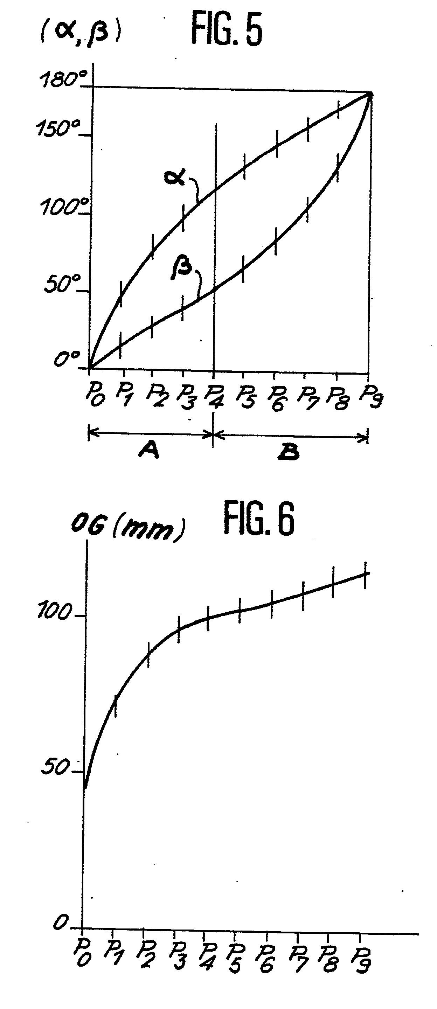

Grâce à ce contrôle de l'effet de la force centrifuge respectivement sur les angles α et β obtenu grâce au mécanisme de déploiement selon l'invention, la distance OG séparant l'axe de rotation O du satellite sur lui-même du centre de gravité G du générateur solaire 12 augmente en permanence depuis la position initiale $P_0$ représentée sur la figure 1 où les panneaux sont complètement repliés jusqu'à la position finale $P_9$ représentée sur la figure 3 où les panneaux sont complètement dépliés. Cette caractéristique essentielle de l'invention apparaît clairement sur la courbe de la figure 6 qui représente l'évolution de la distance OG pour les différentes positions $P_0$ à $P_9$ du panneau. Elle permet d'assurer que la position de déploiement complet du générateur solaire illustré sur la figure 3 est bien atteinte sous l'effet de la seule rotation du satellite sur lui-même.

L'analyse rationnelle du dispositif montre que cette propriété n'est acquise que lorsque :

$$\left(\frac{d\beta}{d\alpha}\right)_{final} \geqslant 4,$$

ce qui n'est obtenu que lorsque (voir figure 3) $d/r \geqslant 0,6$.

Bien entendu, l'invention n'est pas limitée au mode de réalisation qui vient d'être décrit à titre d'exemple en se référant aux figures 1 à 3, mais en couvre toutes les variantes. En particulier et comme l'illustre très schématiquement la figure 7, les dispositifs 20 et 22 formés de deux poulies circulaires identiques peuvent être remplacés par des poulies 20' et 22' centrées respectivement sur les axes d'articulation 16 et 18 des panneaux 14 et 15 et présentant un rayon variable, telles que des poulies sensiblement elliptiques. Sur ces poulies 20' et 22' est enroulé et fixé un câble 24' dont les deux brins situés entre les poulies remplissent le même rôle que les câbles antagonistes 24 et 26 sur les figures 1 à 3. La poulie 20' est fixée sur le corps 10 du satellite de telle sorte que son petit axe soit approximativement parallèle à la face du satellite sur laquelle le générateur solaire est fixé. La poulie 22' est fixée sur le panneau 15 avec son grand axe parallèle à ce panneau.

Par ailleurs, bien que l'invention soit principalement conçue pour être utilisée afin de réaliser le déploiement des générateurs solaires sur un satellite artificiel animé d'un mouvement de rotation sur lui-même en phase de transfert, elle peut s'appliquer au déploiement de tout autre appendice articulé, sur un véhicule spatial quelconque, animé d'un tel mouvement de rotation sur lui-même. Enfin, il est clair que l'invention peut être utilisée quel que soit le nombre de panneaux articulés constituant l'appendice du véhicule spatial.

Dans un autre mode de réalisation de l'invention, non représenté, le mécanisme de déploiement précédemment décrit est constitué par des moteurs-freins électromagnétiques dont le fonctionnement est programmé pour obtenir une loi β(α) permettant de limiter au mieux l'énergie de commande. A cet effet, on fait évoluer les angles β et α de la manière décrite en se référant à la figure 5, afin que la distance OG augmente en permanence lors du déploiement du générateur solaire.

**Revendications**

1. Mécanisme de déploiement automatique d'un appendice (12) fixé sur une face d'un véhicule spatial (10), sous le seul effet d'une rotation (ω) de ce véhicule autour d'un axe 0, ledit appendice comprenant au moins deux panneaux consécutifs (14, 15) articulés et présentant un centre de gravité G, ce mécanisme de déploiement étant caractérisé en ce qu'il agit sur chacun des panneaux (14, 15) de façon à accroître en permanence la distance séparant l'axe de rotation 0 du véhicule du centre de gravité G dudit appendice, depuis une position initiale ($P_0$) dans laquelle les panneaux sont complètement repliés, jusqu'à une position finale ($P_9$) dans laquelle les panneaux sont complètement ouverts, sans passer par une position stable naturelle dans laquele les panneaux sont déployés dans un plan passant par l'axe de rotation 0 du véhicule, ladite position finale étant située au delà de ladite position stable naturelle.

2. Mécanisme selon la revendication 1, caractérisé en ce que, ledit appendice (12) comprenant un panneau intermédiaire (14) articulé autour d'un premier axe d'articulation (16) sur le véhicule spatial (10) et un panneau externe (15) articulé autour d'un deuxième axe d'articulation (18) sur le panneau intermédiaire (14), le mécanisme comprend au moins un câble (24, 26) enroulé sur au moins deux poulies (20a, 20b; 22a, 22b) solidaires respectivement du véhicule spatial et du panneau externe, lesdites poulies étant disposées respectivement à proximité desdits premier et deuxième axes d'articulation, de telle sorte que le rayon d'enroulement du câble autour du premier axe d'articulation (16) augmente en permanence depuis ladite position initiale ($P_0$) jusqu'à ladite position finale ($P_9$), et que le rayon d'enroulement du câble autour du deuxième axe d'articulation (18) diminue en permanence depuis ladite position initial ($P_0$) jusqu'à ladite position finale ($P_9$).

3. Mécanisme selon la revendication 2, caractérisé en ce qu'il comprend une première paire de poulies circulaires (20a, 20b) solidaires du véhicule spatial (10) et dont les axes sont disposés symétriquement et de façon excentrée par rapport au premier axe d'articulation (16), une deuxième paire de poulies circulaires (22a, 22b) solidaires du panneau externe (15) et dont les axes sont disposés symétriquement et de façon excentrée par rapport au deuxième axe d'articulation (18), et deux câbles (24, 26) enroulés en sens inverse et fixés sur une poulie de chacune desdites première et deuxième paires.

4. Mécanisme selon la revendication 2, caractérisé en ce que lesdites poulies (20', 22') ont un rayon variable et sont centrées respectivement sur le premier (16) et sur le deuxième (18) axes d'articulation.

5. Mécanisme selon la revendication 4, caractérisé en ce que lesdites poulies (20', 22') sont sensiblement elliptiques.

6. Mécanisme selon la revendication 1, caractérisé en ce qu'il comprend des moteurs-freins électriques commandant le déploiement de chacun des panneaux de façon à accroître en permanence la distance OG, depuis la position initiale (P0) jusqu'à la position finale (P9).

## Patentansprüche

1. Mechanismus zum automatischen Ausbreiten eines auf einer Fläche eines Raumfahrzeugs (10) befestigten Ansatzstücks (12) allein unter der Wirkung einer Rotation (ω) dieses Fahrzeugs um eine Achse 0, wobei dieses Ansatzstück wenigstens zwei aufeinanderfolgende, gelenkig befestigte Platten (14, 15) besitzt und einen Schwerpunkt G aufweist, wobei dieser Ausbreitungsmechanismus dadurch gekennzeichnet ist, daß er so auf jede der Platten (14, 15) wirkt, daß permanent der Abstand, der die Drehachse 0 des Fahrzeugs von Schwerpunkt G des Ansatzstücks trennt, von einer Startposition (P0), in der die Platten vollständig gefaltet sind, bis zu einer Endposition (P9), in der die Platten vollständig geöffnet sind, zunimmt, ohne durch eine stabile, natürliche Position zu gehen, in der die Platten in einer Ebene ausgebreitet sind, die durch die Rotationsachse 0 des Fahrzeugs geht, wobei sich die Endposition jenseits der stabilen, natürlichen Position befindet.

2. Mechanismus nach Anspruch 1, dadurch gekennzeichnet, daß das Ansatzstück (12) eine mittlere Platte (14), die gelenkig um eine erste Gelenkachse (16) an dem Raumfahrzeug (10) befestigt ist, und eine äußere Platte (15) umfaßt, die gelenkig um eine zweite Gelenkachse (18) an der mittleren Platte befestigt ist, wobei der Mechanismus wenigstens ein auf wenigstens zwei Rollen (20a, 20b; 22a, 22b), die jeweils mit dem Raumschiff und der äußeren Platte befestigt sind, aufgerolltes Kabel (24, 26) umfaßt, wobei die Rollen jeweils in der Nähe der ersten und zweiten Gelenkachse so angeordnet sind, daß der Aufrolldurchmesser des Kabels um die erste Gelenkachse (16) sich permanent von der Startposition (P0) bis zur Endposition (P9) vergrößert und daß der Aufrolldurchmesser um die zweite Gelenkachse (18) sich permanent von der Startposition (P0) bis zur Endposition verringert.

3. Mechanismus nach Anspruch 2, dadurch gekennzeichnet, daß er ein erstes Paar kreisförmiger Rollen (20a, 20b), die am Raumfahrzeug (10) befestigt sind und deren Achsen symmetrisch und exzentrisch bezüglich der ersten Gelenkachse (16) angeordnet sind, und ein zweites Paar kreisförmiger Rollen (22a, 22b), die an der äußeren Platte (15) befestigt sind und symmetrisch und exzentrisch bezüglich der zweiten Gelenkachse (18) angeordnet sind, und zwei Kabel (24, 26) aufweist, die in umgekehrter Richtung aufgerollt und auf einer Rolle jedes des ersten und zweiten Paares befestigt sind.

4. Mechanismus nach Anspruch 2, dadurch gekennzeichnet, daß die Rollen (20', 22') einen variablen Durchmesser haben und jeweils auf der ersten (16) und zweiten (18) Gelenkachse zentriert sind.

5. Mechanismus nach Anspruch 4, dadurch gekennzeichnet, daß die Rollen (20', 22') im wesentlichen elliptisch sind.

6. Mechanismus nach Anspruch 1, dadurch gekennzeichnet, daß er elektrische Brennmotoren umfaßt, die das Ausbreiten jeder der Platten so steuern, daß permanent der Abstand OG von der Anfangsstellung (P0) bis zur Endstellung (P9) zunimmt.

## Claims

1. Mechanism for the automatic extension of an appendage (12) fixed to one face of a space vehicle (10), under the sole effect of a rotation (ω) of said vehicle about an axis 0, said appendage comprising at least two consecutive articulated panels (14, 15) and having a centre of gravity G, characterized in that said mechanism acts on each of the panels (14, 15) so as to permanently increase the distance separating the vehicle axis of rotation 0 from the centre of gravity G of said appendage from an initial position (P0) in which the panels are completely folded back, to a final position (P9) in which the panels are completely open without passing through a natural stable position in which the panels are deployed in a plane passing through the rotation axis 0 of the vehicle, said final position being located beyond said natural stable position.

2. Mechanism according to claim 1, characterized in that the appendage (12) comprises an intermediate panel (14) articulated about a first articulation axis (16) on the space vehicle (10) and an external panel (15) articulated about a second articulation axis (18) on the intermediate panel (14), the extension mechanism comprising at least one cable (24, 26) wound onto at least two pulleys (20a, 20b; 22a, 22b) respectively integral with the space vehicle and the external panel, said pulleys being respectively disposed in the vicinity of said first and second articulation axes, in such a way that the winding radius of the cable about the first articulation axis (16) permanently increases from the said initial position (P0) to said final position (P9) and the winding radius of the cable about the second articulation axis (18) permanently decreases from said initial position (P0) to said final position (P9).

3. Mechanism according to claim 2, characterized in that the extension mechanism comprises a first pair of circular pulleys (20a, 20b) integral with the space vehicle (10) and whose axes are disposed symmetrically and in offcentred manner with respect to the first articulation axis (16), a second pair of circular pulleys (22a, 22b) integral with the external panel (15) and whose axes are disposed symmetrically and in an offcentred manner with respect to the second articulation axis (18) and two cables (24, 26) wound in reverse directions and fixed to one pulley of each of said first and second pairs.

4. Mechanism according to claim 2, characterized in that said pulleys (20', 22') have a variable radius and are respectively centred on the first (16) and second (18) articulation axes.

5. Mechanism according to claim 4, characterized in that said pulleys (20', 22') are substantially elliptical.

6. Mechanism according to claim 1, characterized in that it comprises electric brake motors controlling the extension of each of the panels so as to permanently increase the distance OG from the initial position ($P_0$) to the final position ($P_9$).

FIG. 1

FIG. 2

FIG. 3

FIG. 7

FIG. 4

$(\alpha, \beta)$  FIG. 5

$OG\ (mm)$  FIG. 6